Europäisches Patentamt

European Patent Office

Office européen des brevets

(11) Publication number: **0 416 747 A1**

# EUROPEAN PATENT APPLICATION

(21) Application number: **90308592.6**

(22) Date of filing: **03.08.90**

(51) Int. Cl.⁵: **H02K 15/00**

(30) Priority: **07.09.89 US 403940**

(43) Date of publication of application:
**13.03.91 Bulletin 91/11**

(84) Designated Contracting States:
**DE GB IT**

(71) Applicant: **PEASE WINDAMATIC SYSTEMS, INC.**
**County Road 70, State Road 3**
**Huntertown, Indiana 46848(US)**

(72) Inventor: **Eminger, Robert J**
**7120 Melody Lane**
**Fort Wayne, Indiana 46804(US)**

Inventor: **Van Gilder, Donald L.**
**6114 Bellingham**
**Fort Wayne, Indiana 46835(US)**
Inventor: **Ebert, Bueford**
**224 Burnam Street**
**Kendallville, Indiana 46755(US)**
Inventor: **Russel, Paul R.**
**11631 Gladsford**
**Roanoke, India 46783(US)**

(74) Representative: **Purvis, William Michael Cameron et al**
**D. Young & Co. 10 Staple Inn**
**London WC1V 7RD(GB)**

(54) Lead straightening and trimming apparatus.

(57) Lead straightening and trimming apparatus for leads of electrical components such as stators (10) includes pallets (11) having positioning posts (15) which position the stators (10) on the pallets (11) and also position coils (13) within the stator (10). Rotatable helical pick-up tools (27 a , 27 b , 27 c ) are movable between retracted positions and extended positions adjacent to the pallets (11) which have lead retaining posts (16). The pick-up tools operate to capture free ends (21) of the leads (14) extending from the posts (16). Upon retraction, the pick-up tools move the associated free ends (21) of the leads to partially straightened gripping positions. Combined gripping, straightening and cutting apparatus (32, 33) then grips the associated leads (14) adjacent to the retaining posts (16) with a force insufficient to cut the leads. Retraction of the apparatus (32, 33) straightens the portion of the lead extending from the retaining post (16) of the pallet (10). The apparatus (32, 33) is then released to release tension in the lead and subsequently cuts the lead (14) along the straightened portion at a predetermined distance from the post (16).

Fig.1

EP 0 416 747 A1

## LEAD STRAIGHTENING AND TRIMMING APPARATUS

The invention relates generally to the manufacture of electrical components, such as stators and more particularly to a method and apparatus for straightening, trimming and finishing of lead wires of such components.

The manufacture of electrical devices such as electric motor components has become highly automated. For example, automated systems have been developed for the manufacture of stators having coils installed therein. In one such system described in Patent Specifications US-A-4,648,176 and US-A-4,723,254, coil leads are positioned in retaining apertures in an stator carrying pallet during a portion of the assembly process. Subsequently, a rotating helical pick-up tool engages the leads, removes the leads from the retaining apertures, and transfers such leads from the retaining apertures to a lead cutting assembly for further processing. Such systems require a relatively complex apparatus first to position the leads in the retaining apertures and thereafter to transfer the leads to the cutting assembly. The disclosure of the above mentioned specifications is, incorporated herein by reference to illustrate the background of this invention.

According to one aspect of the invention there is provided a method of finishing wire leads of electrical components when the leads are held in retainers and provide free ends randomly extending from the retainers, comprising capturing the free ends in a pick-up tool, retracting the pick-up tool to move the free ends to a gripping position in which the free ends extend generally in a predetermined direction from the retainers, while the free ends are in the gripping position gripping the free ends with grippers, applying tension to the free ends by means of the grippers, thereby straightening portions of the free ends extending from the retainers, and cutting the free ends at least adjacent the portions leaving the straightened portions extending from the retainers in a predetermined direction through a predetermined distance.

According to a further aspect of the invention there is provided a method of finishing wire leads of electrical components having leads held by retainers and free ends extending from the retainers, comprising gripping the free ends in gripper cutters with a gripping force insufficient to cut the free ends, applying tension to portions of the free ends between the gripper cutters and the retainers to straighten the portions, and thereafter cutting the leads with the gripper cutters to provide straight portions of lead extending from the retainers in a predetermined direction therefrom.

According to yet another aspect of the invention there is provided a method of straightening a lead wire positioned in a retainer and extending therefrom in a random direction, comprising the steps of capturing the lead in a rotatable helical pick-up while the helical pick-up is in an extended position adjacent the retainer, retracting the pick-up from the retainer to move the lead to a position extending from the retainer generally in a predetermined direction therefrom, thereafter gripping the lead adjacent the retainer in a gripper and retracting the gripper along the predetermined direction pulling at least a portion of the lead straight, and thereafter trimming the lead along the straight portion thereof.

According to a still further aspect of the invention there is provided lead straightening apparatus for a lead of an electrical component which is held in a retainer and has a free end randomly extending from the retainer, comprising a helical pick-up, a pick-up drive rotating the pick-up while moving the pick-up between a retracted position spaced from the retainer and an extended position adjacent to the retainer, the pick-up operating while extended to capture the lead adjacent to the retainer and move the free end of the lead out from the retainer to a gripping position, and a combination straightener and cutter operable to grip the lead in the gripping position adjacent to the retainer, the gripper then retracting away from the retainer while exerting sufficient gripping force to produce a straight portion of the free end adjacent to the retainer, the gripper cutter thereafter operating to cut the lead along the straightened portion.

According to still another aspect of the invention there is provided apparatus for capturing a lead of an electrical component supported in a retainer and having a free end extending from the retainer in a random direction, wherein the retainer has a projection projecting in a predetermined direction to a face from which the free end projects, a rotating pick-up member movable to an extended pick-up position and having an end movable around the projection and operable to engage and capture the associated free end, the pick-up operating to move the associated free end to a predetermined position relative to the retainer for subsequent operations.

According to a yet further aspect of the invention there is provided lead straightening apparatus for straightening a lead positioned in a retainer and extending in a random direction therefrom, comprising a rotating helical pick-up movable to an extended position adjacent the retainer, operable to capture the lead and movable to a retracted position causing the lead to extend from the retainer generally in a predetermined direction, gripper and cutter means movable to a gripping position adjacent the retainer to grip the lead and retractable from the retainer while gripping the lead to straighten at least a portion of the lead and position the portion along the predetermined direction, the gripper and cutter means operating to cut the lead along the straightened portion a predetermined distance from the retainer.

In one embodiment, stators having coils are assembled on pallets that move along a conveyor system to various work stations of an overall assembly system. Before the pallets and stator assemblies reach a straightener and trimmer, the coil leads are manually positioned in post retainers provided on the pallet. The free ends of the leads project from the post retainers in a random manner.

The pallets can also provide positioning posts which function to retain the coils in position within the stators until they are stitched.

The randomly oriented leads can be engaged by a rotating helical pick-up tool which moves to a position immediately adjacent to the post retainer to capture the lead. The pick-up tool then retracts and pulls the free end of the coil lead out away from the retainer post. This causes a preliminary straightening of the lead and positions the lead within a known range of positions with respect to the associated retainer post. The leads are sufficiently stiff to maintain their extended position when the pick-up tools retract clear of the ends of the leads.

The conveyor then moves the pallet and partially straightened leads to a work station, where leads are fully straightened and trimmed to length. At this work station, a gripper closes on the leads adjacent to the retainer post. The gripper then retracts, exerting sufficient tensile force on the leads fully to straighten the portion of the lead extending from the retainer post.

After the grippers retract and fully straighten the portion of the lead, the grippers release their grip to release the tension in the leads. Thereafter, the leads are trimmed to length. By releasing the tension prior to trimming, the cut lead length extending from the post can be accurately maintained. In the illustrated embodiment, the grippers that function to straighten the leads also cut or trim the leads.

During the straightening operation, the grippers grip the leads with a low force which does not cut the leads but provides sufficient gripping to produce sufficient tensile forces within the lead to cause the lead to straighten fully. As the grippers retract, they slide along the lead surface and straighten portions of the leads.

Preferably the grippers are slid along the straightened portions to bare the wire of such portions.

The invention is diagrammatically illustrated by way of example in the accompanying drawings in which:-

Figure 1 is a schematic, perspective view of lead straightening and trimming apparatus according to the invention;

Figure 2 is an enlarged perspective view of a pallet and a supported stator of the apparatus of Figure 1;

Figure 3 is a vertical, lateral view of a pick-up station, schematically illustrating helical pick-ups aod their drive of the apparatus of Figure 1;

Figure 4 is a plan view of two of the helical pick-ups illustrated in Figure 3;

Figure 5 illustrates one of the helical pick-ups of Figure 3 in a retracted position prior to capture of an associated lead;

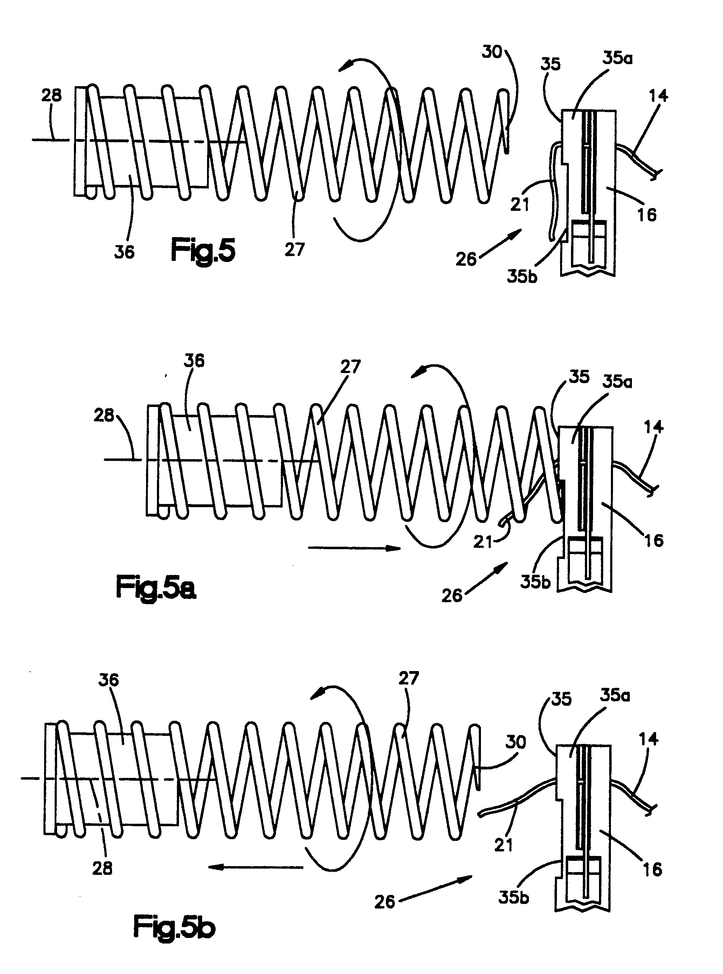

Figure 5 a is a fragmentary view similar to Figure 5 but illustrating the helical pick-up in its extended capture position after engagement with an associated lead;

Figure 5 b is a fragmentary, schematic view similar to Figures 5 and 5 a , illustrating a partially straightened lead after the helical pick-up retracts;

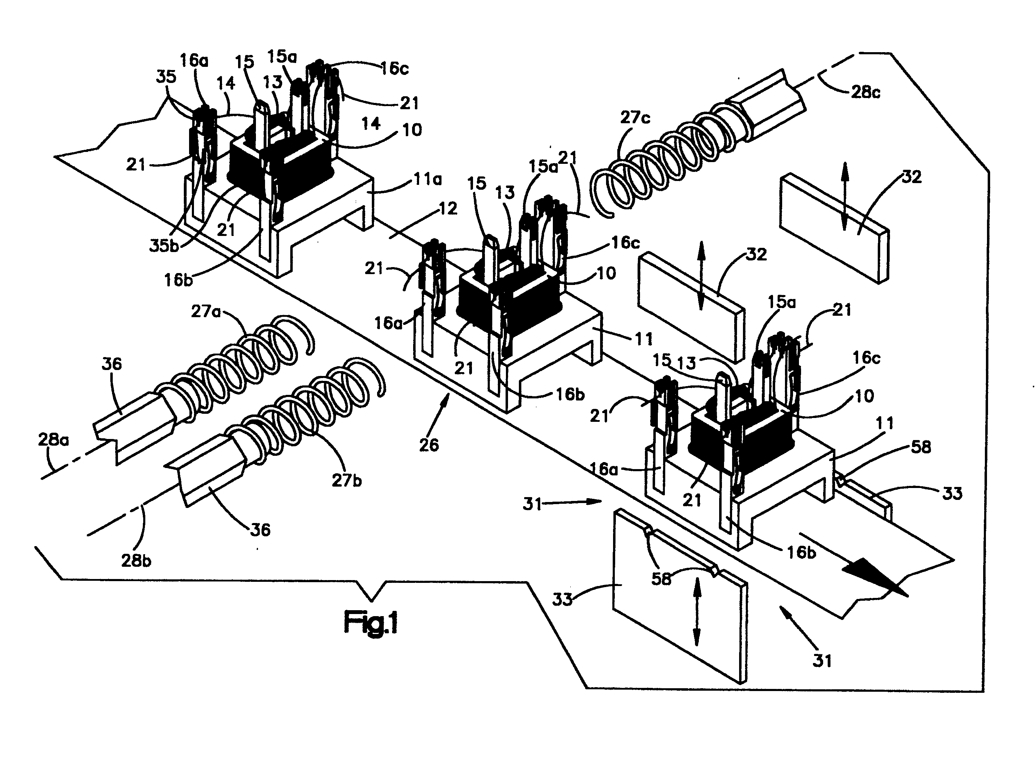

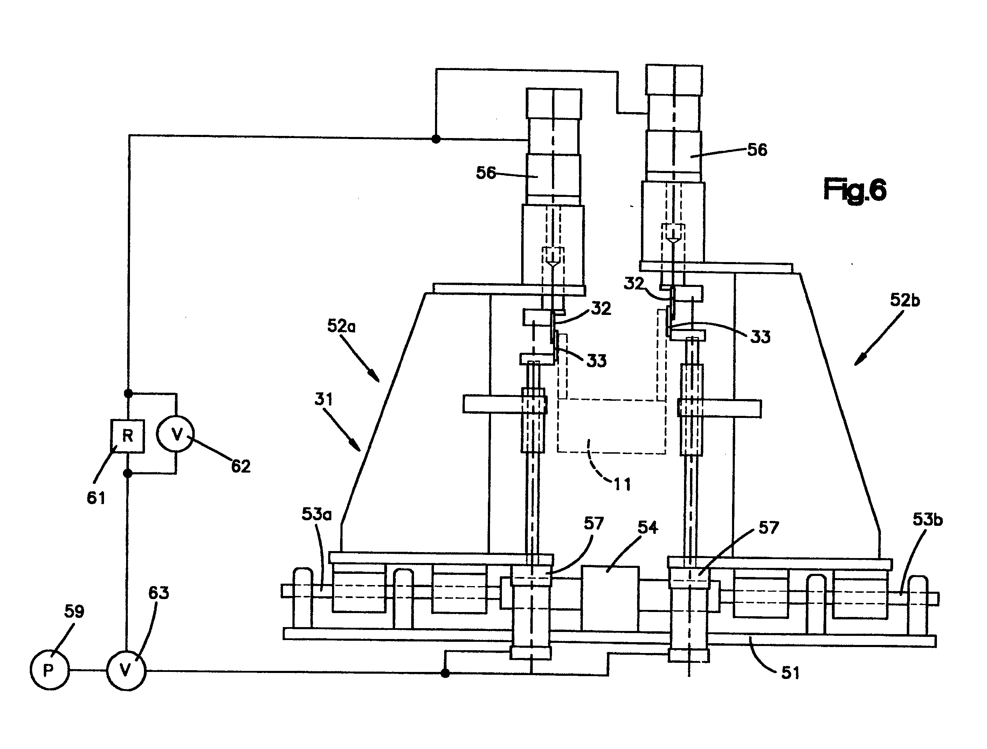

Figure 6 is a vertical, lateral, schematic view of a final straightening and cutting station of the apparatus of Figure 1;

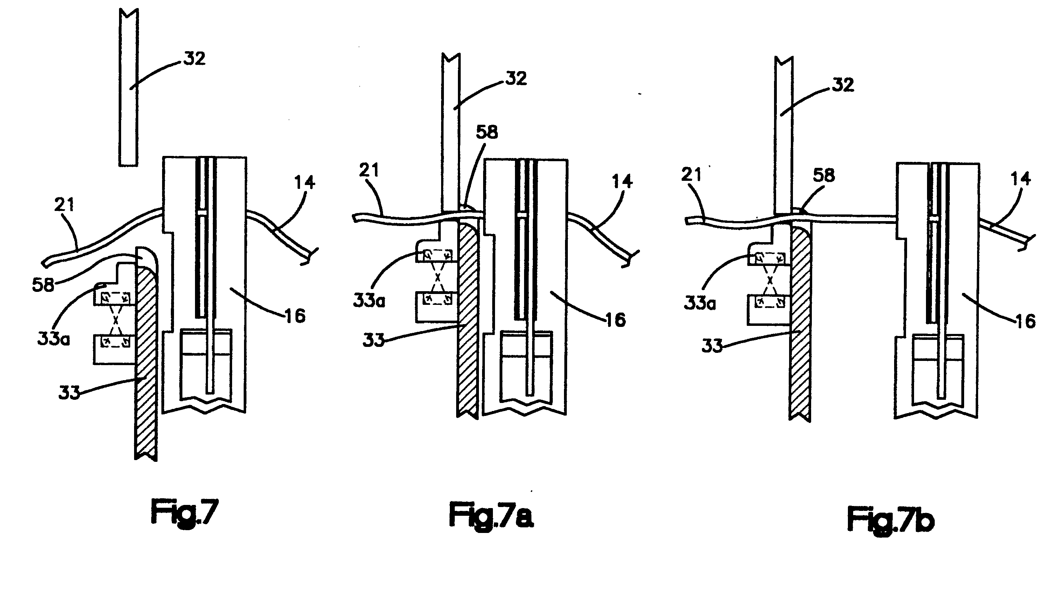

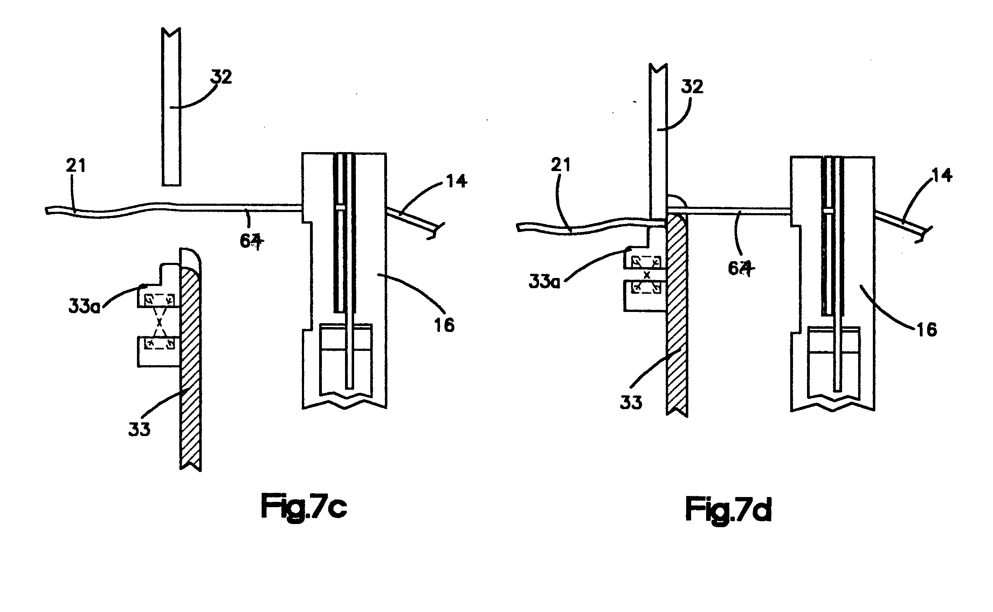

Figure 7 is an enlarged fragmentary view, illustrating straightener cutter blades at the station of Figure 6 prior to their engagement with the partially straightened lead;

Figure 7 a is a view similar to Figure 7, illustrating the straightener cutter blades at the moment of gripping;

Figure 7 b is a fragmentary view similar to Figures 7 and 7 a after the straightener cutter blades have moved laterally to straighten a portion of the lead;

Figure 7 c is a fragmentary view similar to Figures 7 to 7 b , illustrating the straightener cutter blades at the completion of the straightening operation and after the straightened lead is released; and

Figure 7 d is a fragmentary view similar to Figures 7 to 7 c , illustrating the straightener and cutter blades after the excess material of the lead is cut away leaving a straightened lead of predetermined length on which a connector can subsequently be installed.

Figure 1 schematically illustrates an overall system for capturing, straightening and trimming the leads of an electrical component. In this instance, the electrical component is a motor stator 10 carried by a pallet 11. Each of the stator supporting pallets 11 is moved by a conveyor, schematically illustrated at 12, to various stations at which operations are performed. Coils 13 are wound and positioned within the stator prior to reaching straightening and trimming stations illustrated in Figure 1. The coils 13 each have two leads 14 which must be straightened and finished in a reliable manner.

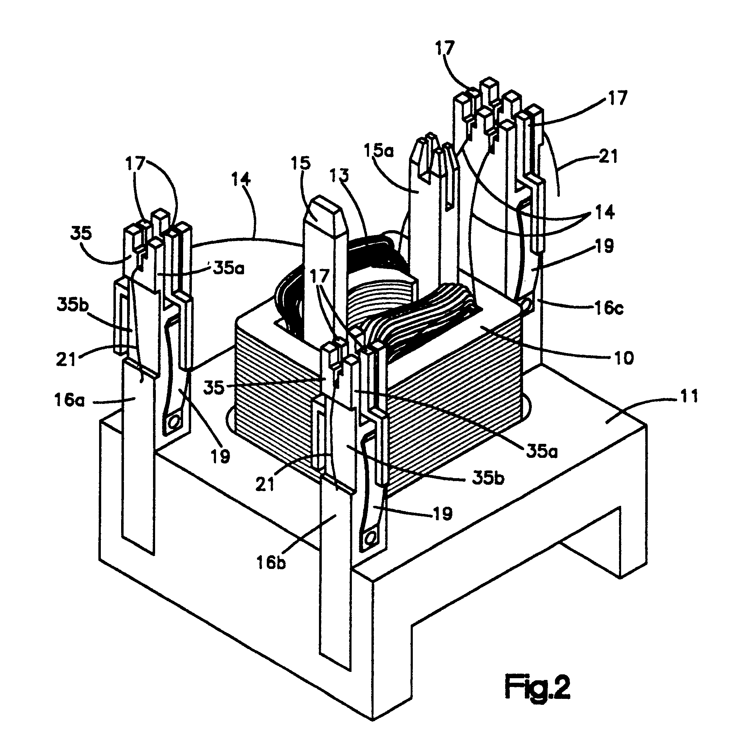

Prior to reaching the locations illustrated in Figure 1, the coils 13 are installed in the stators 10 and the coil and stator assemblies are each positioned on a respective pallet 11. Positioning posts 15 extend up through the stator 11 to position the stator on the pallet and also to hold the coils 13 in position within the stators. Because the posts 15 extend up a substantial distance, they also function to guide the stator into its installed position. The leads 14 are positioned in associated retainer posts 10 prior to reaching the position of Figure 1. In the illustrated embodiment, the pallets 11 each provide two retainers posts 16 a and 16 b on one side and a double retainer post 16 c on the opposite side. Each of the retainer posts 16 a and 16 b includes spring-loaded grippers 17, best illustrated in Figure 2. The grippers 17 have gripper jaws which are biased by associated springs 19 toward a gripping position.

In the illustrated assembly, the leads 14 are manually positioned in the associated grippers on the two posts 16 a and 16 b so that free ends 21 of the leads 14 extend down along the associated posts 16. Similarly, the double post 16 c on the opposite side of the pallet 11 provides two grippers 17 positioned to receive two additional leads 14, with one lead positioned in each of the two grippers 17. Here again, the free ends 21 of the leads extend beyond the associated grippers 17 and down along the side thereof. The positioning post 15 provides a support on which a motor protector (not illustrated) can be mounted.

Figure 1 (at a pallet position 11 a ) and Figure 2 illustrate the stator 10 and leads 14 prior to a straightening and trimming operation. The free ends 21 of the leads 14 are illustrated positioned so that they extend down along the associated retainer post 16. A straightening and trimming means can capture, straighten and trim the leads 14 having the free ends 21 which extend in a random manner from the associated gripper 17.

Located at a capturing station 26 are three helical pick-ups 27 a , 27 b and 27 c . The pick-ups 27 a and 27 b are respectively aligned with the retainer posts 16 a and 16 b . The pick-up 27 c is aligned with the double retainer post 16 c . The three helical pick-ups 27 a to 27 c are each rotatable about an associated axis 28 a , 28 b and 28 c and are movable between a retracted position illustrated in Figure 1 and an extended position in which the pick-ups are located immediately adjacent to the associated retainer posts 16. As described in greater detail below, the rotating pick-ups 27 capture the associated free end 21 of the associated lead and, upon retraction, pull the lead 14 out to a preliminary straightened position in which it extends generally perpendicular to the associated retainer post 16.

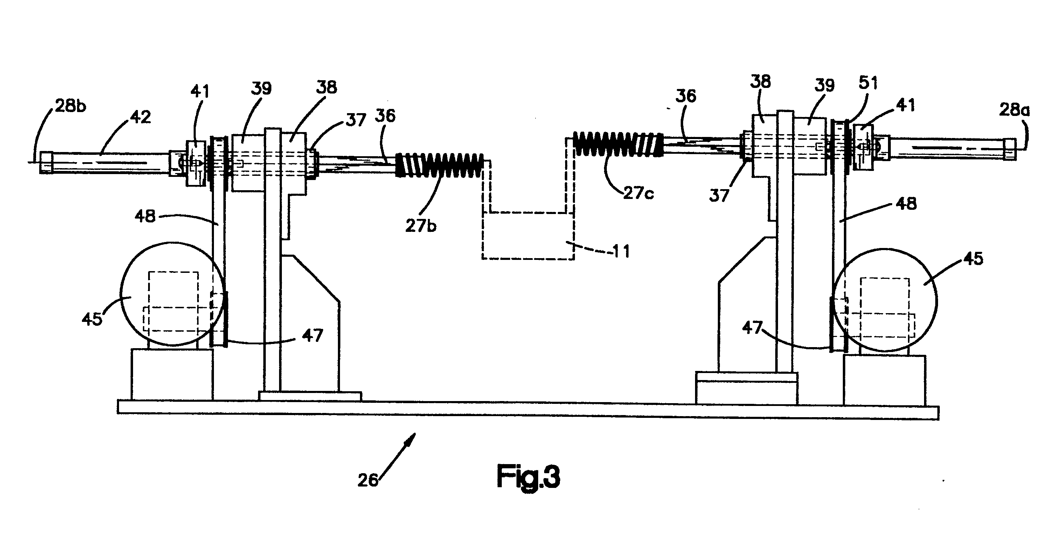

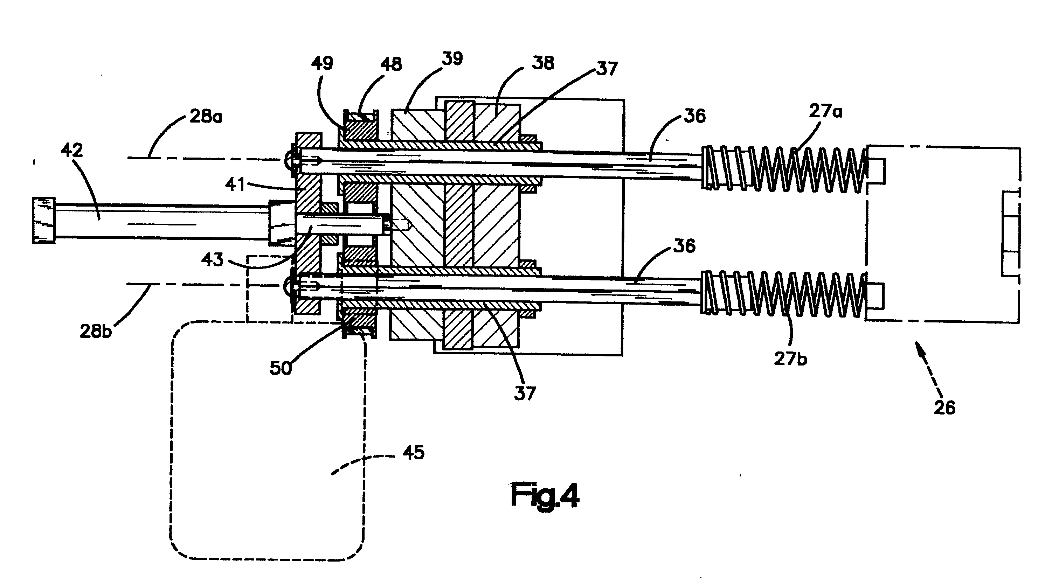

Referring now to Figures 3 and 14, each of the pick-ups 27 a , 27 b and 27 c is mounted on one end of a respective noncircular support rod 36. In the illustrated embodiment, the support rods 36 have a hexagonal cross-section. The support rods 36 extend rearwardly through mating support tubes 37 which are journalled in associated bearing members 38 and 39 for rotation about its respective axis 28 a to 28 c . In Figure 4, only the support for the two pick-ups 27 a and 27 b is illustrated in order to simplify the drawings. However, a similar support structure is provided for the pick-up 27 c , so the structural description of the support for the pick-ups 27 a and 27 b applies similarly to the support structure for the pick-up 27 c .

The interior of each support tube 37 is provided with a cross section similar to the cross section of the respective support rod 36. Therefore, as the support tube 37 rotates, the respective support rod 36 is caused to rotate. However, the support rod 36 is free to move axially within the associated support tube 37.

The other end of each support rod 36 is journalled in a cross-head member 41 and is free to rotate relative thereto. The cross-head member 41 is secured to one end of a cylinder 42 of a piston and cylinder actuator. The piston 43 of the actuator is mounted in the bearing member 39, so that when the actuator is operated, the piston 42 moves back and forth in a direction parallel to the axes 28 a and 28 b , causing the cross-head, and in turn the pick-ups 27 a to 27 b to move axially backward and forward between a retracted position illustrated in Figure 1 and an extended position illustrated in Figures 3 and 4.

Motors 45 are mounted below the cross-head member 41 and drive pulleys 47. Belts 48 extend around the drive pulleys 47 and over driven pulleys 49, 50 and 51. A respective one of the pulleys 49, 50 and 51 is mounted on each support tube 37 and is fixed against rotation relative to the associated support tube so that the motors 45 function to rotate the associated support tube 37, and therefore rotate the associated support rod 36. With this structure, each of the pick-ups 27 a , 27 b , 27 c is rotated about its axis and is movable forward and backward between a retracted and an extended position.

The manner in which the pick-ups function to capture and partially to straighten the free ends 21 of the associated leads is best illustrated in Figures

5, 5 a and 5 b . Prior to capturing the free end 21 of the lead 14, such lead extends through the associated post 16, with the free end 21 extending downwardly along the forward surface of the post. Initially, the pick-up tool 27 is rotating about its axis 28 and is retracted back from the retainer post, as best illustrated in Figure 5.

The cylinder 42 operates to move the pick-up 27 toward its extended position illustrated in Figure 5 a and in such position a forward end 30 of the pick-up is moved forward a sufficient amount to extend past an end face 35 on a projection 35 a on the retainer post 16 and into a shallow recess 35 b formed in the retainer post 16. The helix of the pick-up 27 is sized so that the diameter of the forward end 30 is greater than the maximum lateral dimension of the projection 35 a so that is clears the sides of the projection 35 a . In its extended position, the forward end 30 projects into the recess 35 b to ensure that the free end 21 of the lead is captured.

The rotation of the pick-up 27 causes the free end to be threaded along the length of the pick-up 27, as best illustrated in Figure 5 a . This draws the free end out away from the retainer post. After the capture of the free end, the pick-up is retracted, as illustrated in Figure 5 b , leaving the free end 21 extending generally perpendicular to the forward face of the retainer post 16. It should be noted that even though it is typical for the free end initially to be in a downwardly extending position, the pick-up can engage and capture free ends of the leads in virtually any position which they may extend from the grippers per se . Thus, the pick-up can capture randomly positioned free ends, and can therefore function with full reliability.

After the lead has been partially straightened at a work station 26, the conveyor 12 moves the pallets 11 to a final straightening and trimming station 31 illustrated in Figure 6. Located at the straightening and cutting station 31 are two pairs of straightener cutters with one pair on each side of the conveyor and each pair comprising an upper straightening and cutting blade 32 and a lower straightening and cutting blade 33. The straightening and cutting blades 32, 33 function first to straighten a portion of the free end 21 of each lead 14 extending from the associated retainer post 16 and subsequently operate to cut the leads 14 a predetermined distance from the associated retainer post.

Mounted on a frame 52 are a pair of substantially similar but opposite straightening assemblies 52 a and 52 b . Each of the assemblies is mounted on a respective support rail 53 a and 53 b so that the two assemblies can move laterally toward and away from the pallet 11. A piston and cylinder actuator assembly 54 is connected to each of the assemblies and is operable to move the assemblies toward and away from the pallet. In Figure 6, the assemblies are illustrated in their forward position closely adjacent the pallets.

Each of the assemblies 52 a and 52 b supports one of the upper straightener blades 32 connected to the piston of an associated actuator and air spring 56 for vertical movement. Each of the assemblies 52 a and 52 b also mounts one of the lower straightener blades 33 which is supported for vertical movement by an associated piston and cylinder pneumatic spring 57. As best illustrated in Figure 1, the lower gripper members 33 are provided with "V" notches 58 in their upper edges to assist in the capture of the partially straightened free ends of the leads. During initial gripping, the blades 32 and 33 are immediately adjacent to the retainer posts 16. At such location, the free end 21 of the lead 14 is in a position which is essentially constant even though the position of the remainder of the free end can differ. Therefore, since the grippers initially grip adjacent the retainer posts 16, the "V" notches ensure reliable gripping. A spring-loaded pressure pad 33 a is carried by each associated blade 33 and is spring-biased to an extended position in which it engages the underside of the lead.

The actuators 57 and the actuator pneumatic springs 56 are connected to a source of pressure 59 through a valve 63. In the case of the springs 56, the valve 63 is connected through a pressure reducing regulator 61 and a bypass valve 62 which can operate to bypass the regulator 61. The actuators 57 are directly connected to the source of pressure 59 through the valve 63.

The operation of the final straightener and trimming assemblies is best illustrated in Figures 7 to 7 d . The upper and lower gripper blades 32 and 33 are in retracted positions as the pallet moves to the final straightening and trimming position 31. Further, the two assemblies 52 a , 52 b are moved toward the pallet so that the two gripper blades 32 and 33 are immediately adjacent to the associated retainer posts 16. In such position, the partially straightened free end 21 of each lead 14 is positioned between the two gripper blades and the pressure pad 33 a and in substantial alignment with the associated "V" notch 58.

The first step of the operation involves the opening of the valve 63 to pressurise the actuator springs 56 of the upper blades and the actuators 57 of the lower gripper blades. The stroke of each actuator 57 is such that it brings the lower blade and pressure pad up against the lower side of the associated free end 21, as best illustrated in Figure 7 a . The stroke of the upper actuator spring 56, however, is such that if sufficient force were applied, it would move the upper blade 32 down alongside the lower blade and cut off the lead 14. At this point in the operating cycle, however, the valve 62 remains closed and the pressure supplied by the regulator 61 is sufficiently low for the lead to be merely gripped at a low force level and not cut.

While the lead 14 is gripped between the two gripper blades and the pressure pad, the actuator 54 is operated to move the two assemblies 52 a and 52 b away from their associated retainer posts 16. This movement while the associated leads are gripped causes complete straightening of a portion 64 of the lead immediately adjacent to the associated retainer post 16, as illustrated in Figure 7 b .

After the straightening movement as illustrated in Figure 7 b , the actuators 56 and 57 are depressurised, allowing the grippers to release the lead. This releases the tension in the leads, as illustrated in Figure 7 c , so that when it is finally cut it will have a predetermined length extending from the associated retainer post.

After the tension in the lead has been released as illustrated in Figure 7 c , the two actuators 56 and 57 are again operated. However, at this time both of the valves 62 and 63 are opened so that full pressure is applied to the actuator 56 and sufficient force is transmitted to the upper gripper blade 32 to cause the lead to be cut as illustrated in Figure 7 d . As the upper blade 32 moves down, cutting the lead, the pressure pad 33 a is pressed back against its spring bias.

However, the pressure pads 33 a support the portion of the associated lead extending beyond the lower cutter to improve the cut by preventing the lead from bending down along the face of the lower blade 33. At this time, a predetermined length of lead extends straight out from the associated retainer post so that the lead can be finished in any desired manner, usually by applying a connector to the lead.

Thus a simple, reliable mechanism functions to capture the free ends of the leads, to straighten and accurately to trim the leads in a fully automated reliable manner.

## Claims

1. A method of finishing wire leads (14) of electrical components when the leads (14) are held in retainers (16) and provide free ends (21) randomly extending from the retainers (16), comprising capturing the free ends (21) in a pick-up tool (27 a , 27 b , 27 c ), retracting the pick-up tool to move the free ends (21) to a gripping position in which the free ends extend generally in a predetermined direction from the retainers (16), while the free ends are in the gripping position gripping the free ends with grippers (32, 33, 33 a ) applying tension to the free ends (21) by means of the grippers (32, 33, 33 a ) thereby straightening portions (64) of the free ends (21) extending from the retainers (16), and cutting the free ends (21) at least adjacent the portions (64) leaving the straightened portions (64) extending from the retainers (16) in a predetermined direction through a predetermined distance.

2. A method according to claim 1, including gripping the free ends (21) with the grippers (32, 33, 33 a ) adjacent to the retainers, and moving the grippers away from the retainers to apply tension to the free ends to straighten said portions.

3. A method according to claim 2, including sliding the grippers (32, 33, 33 a ) along the portions to bare the wire of the portions (64).

4. A method according to in claim 3, including cutting the lead with the grippers (32, 33 33 a ) after straightening the portions (64) of the leads (14).

5. A method according to claim 4, in which the pick-up tool is an open helix (27 a , 27 b , 27 c ), and including rotating the pick-up tool as it engages a respective one of the free ends (14) to capture the respective free end (14) and to move it into general alignment with the pick-up tool.

6. A method according to claim 1, wherein the electrical component is a motor component (10) having coils (13) installed therein, and including supporting the motor component (10) on pallets (11) having positioning means (15) which position the coils in the motor component and also position the motor component on the pallet (11).

7. A method according to claim 6, wherein the motor component is a stator (10) and the positioning means are posts (15) extending through the stator (10) and positioning the coils (13) therein.

8. A method of finishing wire leads of electrical components having leads (14) held by retainers (16) and free ends (21) extending from the retainers (16), comprising gripping the free ends in gripper cutters (32, 33, 33 a ) with a gripping force insufficient to cut the free ends (21), applying tension to portions (64) of the free ends (21) between the gripper cutters (32, 33, 33 a ) and the retainers (16) to straighten the portions (64), and thereafter cutting the leads with the gripper cutters (32, 33, 33 a ) to provide straight portions (64) of lead extending from the retainers (16) in a predetermined direction therefrom.

9. A method according to claim 6, including operating the gripper cutters (32, 33, 33 a ) to release the leads to eliminate tension in the leads before cutting the leads so that the straightened and cut leads extend a predetermined distance from the retainers.

10. A method of straightening a lead wire (14) positioned in a retainer (16) and extending therefrom in a random direction, comprising the steps of capturing the lead (14) in a rotatable helical pick-up (27 a , 27 b , 27 c ) while the helical pick-up is in an extended position adjacent the retainer (16), retracting the pick-up from the retainer to move the lead (14) to a position extending from the retainer generally in a predetermined direction therefrom, thereafter gripping the lead (14) adjacent the retainer in a gripper (32, 33, 33 a ) and retracting the gripper along the predetermined direction pulling at least a portion (64) of the lead straight, and thereafter trimming the lead (14) along the straight portion (64) thereof.

11. Lead straightening apparatus for a lead (14) of an electrical component (10) which is held in a retainer (16) and had a free end (21) randomly extending from the retainer (16), comprising a helical pick-up (27 a , 27 b , 27 c ), a pick-up drive (41 to 51) rotating the pick-up while moving the pick-up between a retracted position spaced from the retainer and an extended position adjacent to the retainer, the pick-up operating while extended to capture the lead (14) adjacent to the retainer and move the free end (21) of the lead out from the retainer to a gripping position, and a combination straightener and cutter (32, 33, 33 a ) operable to grip the lead in the gripping position adjacent to the retainer, the gripper (32, 33, 33 a ) then retracting away from the retainer while exerting sufficient gripping force to produce a straight portion (64) of the free end (21) adjacent to the retainer, the gripper cutter thereafter operating to cut the lead along the straightened portion (64).

12. Lead straightening apparatus according to claim 11, wherein the electrical component is a stator (10) with coils (13) installed therein, and the apparatus includes pallets (11) to support the stators (10), the pallets (11) including positioning means (15) extending through the stators (10) to position the stators on the respective pallets (11) and also to position the coils (13) in the stators (11).

13. Apparatus for capturing a lead (14) of an electrical component (10) supported in a retainer (16) and having a free end (21) extending from the retainer (16) in a random direction, wherein the retainer (16) has a projection (35 a ) projecting in a predetermined direction to a face (35) from which the free end (14) projects, a rotating pick-up member (27 a , 27 b , 27 c ) movable to an extended pick-up position and having an end (30) movable around the projection (35 a ) and operable to engage and capture the associated free end, the pick-up operating to move the associated free end to a predetermined position relative to the retainer (16) for subsequent operations.

14. Apparatus according to claim 13, wherein the apparatus includes straightening means (32, 33, 33 a ) able to engage the free end (14) in said predetermined position and to straighten at least a portion (64) thereof.

15. Apparatus according to claim 13, including straightening and cutting means (32, 33, 33 a ) operable to straighten a portion (64) of the associated free end (14) extending from the retainer (16) and to cut off unstraightened parts of the free end (14).

16. Apparatus according to claim 13, wherein the pick-up member (27 a , 27 b , 27 c ) is an open helix having a diameter at the end (30) larger than the maximum lateral dimension of the projection (35 a ) adjacent to the face (35).

17. Lead straightening apparatus for straightening a lead positioned in a retainer (16) and extending in a random direction therefrom, comprising a rotating helical pick-up (27 a , 27 b , 27 c ) movable to an extended position adjacent the retainer (16), operable to capture the lead (14) and movable to a retracted position causing the lead to extend from the retainer generally in a predetermined direction, gripper and cutter means (32, 33, 33 a ) movable to a gripping position adjacent the retainer (16) to grip the lead (14) and retractable from the retainer while gripping the lead to straighten at least a portion (64) of the lead and position the portion (64) along the predetermined direction, the gripper and cutter means (32, 33, 33 a ) operating to cut the lead (14) along the straightened portion (64) a predetermined distance from the retainer (16).

18. Lead straightening apparatus according to claim 17, wherein the gripper and cutter means (32, 33, 33 a ) are operated by an actuator (56) operable to cause gripping at a first force level insufficient to cut the free end (14) and operable thereafter at a higher force level to cut the free end (14).

19. Lead straightening apparatus according to claim 17, wherein the actuator (56) causes the gripper and cutter means (32, 33, 33 a ) to release the gripping of the free end before cutting the free end.

Fig.1

EP 0 416 747 A1

**Fig.2**

Fig.3

EP 0 416 747 A1

Fig.4

EP 0 416 747 A1

Fig.5

Fig.5a

Fig.5b

Fig.6

EP 0 416 747 A1

Fig.7     Fig.7a     Fig.7b

EP 0 416 747 A1

European
Patent Office

EUROPEAN SEARCH
REPORT

Application Number

EP 90 30 8592

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0 203 257 (INDUSTRA PRODUCTS)<br>* page 27, line 17 - page 30, line 5; figures 13-17 * | 1,6,7,<br>10-13,16,<br>17 | H 02 K 15/00 |
| | – – – | | |
| A | US-A-4 074 418 (H.I.PEARSALL)<br>* column 8, lines 1 - 33; figures 5-7 * | 1,2,6-8,<br>10-12,17 | |
| | – – – | | |
| A | US-A-4 856 180 (E.G.BARRETT)<br>* column 6, line 23 - column 7, line 30; figure 4 * | 1 | |
| | – – – | | |
| A | PATENT ABSTRACTS OF JAPAN vol. 10, no. 82<br>(E-392)(2139) 2 April 1986,<br>& JP-A-60 226743 (HITACHI) 12 November 1985,<br>* the whole document * | 1 | |
| | – – – | | |
| A | EP-A-0 210 669 (AXIS)<br>* abstract; figure 2 * | | |
| | – – – – – | | |

| TECHNICAL FIELDS<br>SEARCHED (Int. Cl.5) |
|---|
| H 02 K<br>H 01 F |

The present search report has been drawn up for all claims

| Place of search | Date of completion of search | Examiner |
|---|---|---|
| The Hague | 29 November 90 | ZANICHELLI F. |